# EUROPÄISCHE PATENTSCHRIFT

(11) **EP 1 592 718 B1**
(45) Veröffentlichungstag und Bekanntmachung des Hinweises auf die Patenterteilung: **11.08.2010**
(21) Anmeldenummer: 04711366.7
(22) Anmeldetag: 16.02.2004
(51) Int. Cl.: C08F 20/14, C08F 2/02

(54) **VERFAHREN ZUR DURCHFÜHRUNG EINER MASSEPOLYMERISATION**
METHOD FOR CARRYING OUT A MASS POLYMERISATION
PROCEDE POUR EFFECTUER UNE POLYMERISATION EN MASSE

(30) Priorität: 14.02.2003 DE 10306613
(43) Veröffentlichungstag der Anmeldung: 09.11.2005
(73) Patentinhaber: LIST Holding AG, 4422 Arisdorf (CH)
(72) Erfinder: FLEURY, Pierre-Alain, CH-4433 Ramlinsburg (CH)
(74) Vertreter: Weiss, Peter
(86) Internationale Anmeldenummer: PCT/EP2004/001431
(87) Internationale Veröffentlichungsnummer: WO 2004/072131

(56) Entgegenhaltungen:
- GB-A- 1 013 688

## Beschreibung

Die Erfindung betrifft ein Verfahren zur Durchführung einer Massepolymerisation von Monomeren und/oder Prepolymeren, welche in ihren Polymer wenigstens teilweise löslich sind, insbesondere von Methylmethacrylat (MMA), wobei in einen Knetreaktor zumindest ein Monomer oder Prepolymer zu dosiert wird.

Die Polymerisation in einem Knetreaktor mit oder ohne Lösungsmittel wurde auch untersucht und ist in der DE 101 40 217.1 / EP 10122571.7 gezeigt.

Unter Polymerisation wird die Überführung von niedermolekularen Verbindungen (Monomeren, Oligomeren) in hochmolekulare Verbindungen (Polymere, Makromoleküle, Polymerisate) verstanden. Dabei kann die industrielle Herstellung von Polymeren unter heterogenen oder homogenen Bedingungen erfolgen. Unter heterogenen Reaktionen wird die Polymerisation in Suspension/Emulsion, Ausfällungsreaktionen und Festbett-Fahrweise verstanden.

Die Polymerisationsverfahren in Suspension/Emulsion werden normalerweise in Rührkesseln durchgeführt (Viskosität ist niedrig). Grosse Mengen von Wasser und unterschiedliche Additiven sind aber nötig, um die Segregation/Heterogenität zu erzeugen.

Die Ausfällpolymerisation erfolgt häufig unter Verwendung einer thermodynamischen Abtrennung des Polymers aus seinem Monomer und/oder einem Lösungsmittel. Voraussetzung dafür ist, dass das Polymer im Monomer bzw. dem Lösungsmittel unlöslich ist. Bei dieser Art der Herstellung fällt das Polymer aus.

Die kontinuierliche Festbett-Fahrweise funktioniert mit Rückmischung. Das schon reagierte Polymer wird zurück in die Richtung der Dosierung rückgemischt. Dies ergibt dann eine heterogene Mischung zwischen flüssiger Dosierung und fertigem (polymerisiertem) Produkt. Das Resultat ist eine heterogene granulatartige Polymermasse, in der das flüssige Monomer oder Prepolymer um die festen Partikel durch polymerisiert, wobei diese festen Partikel schon polymerisiert waren.

Unter homogener Massepolymerisation wird verstanden, dass das Polymer in seinem Monomer eine homogene Lösung bildet. Die erste Bedingung zu erfüllen ist, dass das Polymer in seinem Monomer gut löslich ist. So ein definiertes homogenes Polymerisationssystem kann auch mit der oben erwähnten Festbett-Fahrweise funktionieren, mit der Folge, dass das Polymerisationsverfahren in dem Fall heterogen abläuft, weil das zudosierte Monomer oder Prepolymer keine Zeit hat, um sein zurückgemischtes granulatartiges Polymer richtig zu lösen. Die Begrenzung ist hier die Diffusion des Monomers in die Polymerpartikel.

Während der homogenen Massepolymerisation von Methylmethacrylat (MMA) bei hohem Monomerumsatz bildet das Polymer eine feste oder hochviskose Polymermasse, welche jeden konventionell betriebenen Reaktor (z. B. CSTR, Rührkessel) blockieren oder stilllegen kann.

Um diese Mischprobleme (Begrenzungen des Wärme- und Stofftransfers führen zu lokaler Überhitzung und Konzentrationssegregation), die mit der hochviskosen Polymermasse verbunden sind, zu überwinden, wurden verschiedene Verfahrensmöglichkeiten im Stand der Technik für die homogene Polymerisation von MMA vorgeschlagen. Unter diesen gebrauchsfähigen Möglichkeiten waren:
a) die Polymerisation bei hohem Monomerumsatz durchgeführt bei hoher Temperatur, um die Schmelzeviskosität herabzusetzen. Jedoch können einige Parameter, wie die Höchsttemperatur (ceiling temperature, bei welcher ein Gleichgewicht zwischen Polymerisation und Depolymerisation auftritt) diese Möglichkeit beeinflussen (Fleury P.-A., Meyer T., Renken A., Dechema (1992), Band 127, VCH, "Methyl methacrylate polymerisation in a tubular reactor: product quality and reactor behaviour"). Die Firma Sulzer Chemtec hat z. B. eine kontinuierliche, homogene Polymerisation von Styrol und MMA (Methylmethacrylat) in einem Kreislaufreaktor mit statischen Mischelementen entwickelt. Dieses Verfahren erfordert hohe Temperaturen (>>Tg, weit oberhalb der Glasübergangstemperatur), um die Viskosität der Reaktionsmasse niedrig zu halten und damit Beläge an den Reaktorwänden und den Mischelementen zu vermeiden. Solche hohen Temperaturen haben aber unerwünschte Nebenwirkungen, z. B. die Bildung von Oligomeren oder Depolymerisation. Im Fall von Styrol sind diese Nebenwirkungen nicht problematisch; aber für das MMA fängt die Depolymerisation schon bei 155°C an (Stabilisatoren sind dann nötig).
b) Verdünnung der Polymerisationsmischung mit einer grossen Menge einer inerten, flüssigen Phase (Lösungsmittel) welche die Verfestigung der Reaktionsmasse für die Polymerisation bei hohem Monomerumsatz und bei tiefer/mittlerer Temperatur (nahe Tg) verhindert. Der Nachteil dieses Verfahrens ist die Notwendigkeit, einen kostspieligen Separationsschritt mit Lösungsmittelwiedergewinnung/-behandlung vorzusehen. Darüber hinaus ergibt die Verwendung von Lösungsmitteln sowohl ein niedrigeres Molekulargewicht als auch eine reduzierte Polymerisationsgeschwindigkeit. Aus Qualitätsgesichtspunkten mögen die PMMA-Hersteller keine Anwesenheit von Lösungsmittel.
c) die Polymerisation in einem CSTR (kontinuierlicher Rührkessel) ohne Lösungsmittel bei einer mittleren Temperatur (nahe Tg) bis zu einer maximalen Monomerumsatz von 50 bis 60%. Der Monomerumsatz ist begrenzt, um eine "run away"-Reaktion zu vermeiden, in welcher der Trommsdorff-Effekt Stabilitätsprobleme in einem konventionell gerührten Kesselreaktor verursacht. Die grossen Mengen von unreagiertem Monomer müssen in einem Extruder von PMMA separiert und recycliert werden. Dies ist das konventionelle Herstellungsverfahren.

Ziel der vorliegenden Erfindung ist es, eine Massepolymerisation von insbesondere MMA in der konzentrierten Phase (bei hohem Monomerumsatz und bei tiefer Temperatur) anzubieten, wobei ein Knetreaktor benutzt wird, um die oben diskutierten Mischprobleme (Begrenzungen des Wärme- und Stofftransfers führen zu lokaler Überhitzung und Konzentrationssegregation) zu überwinden. Die tiefe Polymerisationstemperatur ist ein Garant für neue Rezepturen, welche beste Produkteigenschaften ergeben.

Zur Lösung dieser Aufgabe führt, dass die Massepolymerisation ohne Lösungsmittel bei amorphen Polymeren unterhalb der Glasübergangstemperatur bzw. bei kristallinen Polymeren unterhalb des Schmelzpunktes durchgeführt wird.

In einem bevorzugten Ausführungsbeispiel, kann in den Reaktor zu dem Monomer oder Prepolymer ein Initiator/Katalysator zudosiert werden. Der Initiator kann mit dem Monomer oder Prepolymer vorgemischt oder einzeln zudosiert werden.

Die Knetkinematiken des Knetreaktors ergeben eine Selbstreinigung der Oberflächen, welche Totzonen vermindert oder vermeidet und eine axiale Förderung der hochviskosen Polymerisationsmasse entlang dem kontinuierlichen Reaktor ermöglicht.

Zur Durchführung des erfindungsgemässen Verfahrens finden bevorzugt zweiwellige Knetreaktoren Anwendung, wie sie beispielsweise in der DE 199 40 521 A1 / DE 101 50 900.6 oder der DE 41 18 884 A1 / EP 0 853 491 gezeigt sind. Diese Reaktoren haben den Vorteil, dass eine grosse Brüdenpassage für die Verdampfungskühlung zur Verfügung gestellt wird, um die Reaktionswärme und die bis zum Granulierungspunkt entstehende Knetenergie abzuführen.

Die Knetreaktoren sind in Bezug auf die Selbstreinigung und die Vermeidung von toten Zonen optimiert. Ferner ist die Form der Knetbarren derart gewählt worden, dass beim gegenseitigen Eingriff der Knet- bzw. Rührbarren keine Kompressionszonen auftreten. Damit kann die Granulierung der homogenen Polymermasse ohne örtliche Überhitzung, hervorgerufen durch übermässige Knetenergie und Mahlwirkung (dies führt auch zu einer unerwünschten Erzeugung von feinen Partikeln), durchgeführt werden.

Das gesamte Verfahren soll kontinuierlich ablaufen. Dabei findet eine gezielte, axiale Förderung der pastösen Masse statt. Hierbei sind verschiedene Wellengeometrien wählbar. Die Förderwinkel der Knetbarren sind anpassbar und dienen der axialen Förderung der Masse im Reaktor.

Es besteht ferner die Möglichkeit, Rückförderzonen einzubauen, die den Füllgrad im Reaktor kontrollieren. Solche Rückförderzonen können auch eine Rückmischung bewirken, wobei das schon polymerisierte PMMA und die flüssige Dosierung (Monomer oder Prepolymer) eine heterogene Rückmischung erzeugen (die Diffusion des Monomers in die Polymerpartikel ist begrenzt). Dies ergibt eine heterogene, granulatartige Masse, in der sich die dosierte Flüssigkeit um die festen PMMA-Partikel verteilt. Als Resultat verläuft die Polymerisation in einem Festbett (um den Partikeln) mit dem Vorteil, dass die scheinbare Viskosität erniedrigt wird und das gemessene spezifische Drehmoment tiefer liegt. Diese heterogene Festbett-Fahrweise könnte vorteilhaft sein, wenn das Drehmoment von der homogenen Massepolymerisation zu hoch ist oder wenn Polymerbeläge auf Flächen des Reaktors zu verhindern sind.

Insbesondere bei Verfahren und/oder Produkten, die eine sehr lange Verweilzeit im Knetreaktor erfordern, kann der Knetreaktor mit einem Prepolymer anstatt mit Monomeren beschickt werden. Das bedeutet, dass vor der eigentlichen Polymerisation im Knetreaktor eine Prepolymerisation in einem vorausgehenden Prozessschritt (z. B. Rührkessel) erfolgt.

Unter ausreichenden Selbstreinigungsbedingungen ist eine homogene Massepolymerisation von MMA unterhalb der Glasübergangstemperatur des Polymers (Tg = 105°C) möglich. Dem Knetreaktor wird ein flüssiges Monomer oder Prepolymer zudosiert. Während der Polymerisation entlang dem Knetreaktor steigt die Viskosität beträchtlich, oft um das sechsfache, bis in den festen Aggregatszustand. In diesem Zustand zerkleinert der Knetreaktor das Polymer ohne Mahlwirkung (bedeutend minimaler Feinanteil), welches dann kontinuierlich als uniformes granulatartiges festes Polymer mit freifliessenden Eigenschaften ausgetragen wird.

Die Polymerisation ist ziemlich exotherm (-55.2 kJ/mol). Der grosse freie Querschnittsbereich des Mischreaktors ist ideal, um die Reaktionswärme des Polymerisationsprozesses durch die Verdampfung der flüssigen Phase abzuführen.

Die homogene Massepolymerisation von MMA wird bei hohem Monomerumsatz in einem Knetreaktor unterhalb der Glasübergangstemperatur durchgeführt. Die hohe Exothermie wird durch Verdampfung des Monomers bevorzugt unter Vakuum abgeführt (Verdampfungskühlung), um die Produkttemperatur zu kontrollieren. Die Verdampfungskühlung ist ein entscheidender Parameter für das Scale-up, insbesondere, wenn der Trommsdorff-Effekt oder der Geleffekt auftritt. Der erfindungsgemäss hohe Monomerumsatzbereich von 60 bis 90% ist dadurch gekennzeichnet, dass eine Selbstbeschleunigung der Polymerisationsgeschwindigkeit aufgrund des Geleffektes auftritt, die aber gerade in einem Kneter kontrolliert werden kann, so dass kein "run away"-Effekt auftritt. Die Produkttemperatur kann nur durch die Anwendung der Verdampfungskühlung in diesem Monomerumsatzbereich von 60 bis 90% kontrolliert werden. Wird unterhalb der Glasübergangstemperatur gearbeitet, so wird die Massepolymerisation bei ungefähr 90% Monomerumsatz aufgrund des Glaseffektes gestoppt.

Das verdampfte Monomer wird extern kondensiert und wieder entweder in den Knetreaktor zurückgeführt oder in einem vorausgehenden Prozessschritt wieder eingesetzt (z. B. Rührkessel für die Prepolymerisation).

### Beispiel:

In einem Zweiwellen-Knetreaktor gemäss der DE 41 18 884 A1 wird eine homogene Massepolymerisation von MMA (Methylmethacrylat) unterhalb der Glasübergangstemperatur (Tg = 105°C) durchgeführt. Der Batch Knetreaktor wurde mit MMA als Monomer und mit Perkadox 16 (ElfAtochem) als Initiator befüllt. Die flüssige Masse wurde 10 Minuten lang mit Stickstoff bei 20°C gespült. Die Wandtemperatur wurde dann auf 50°C und die Rührerdrehzahl auf 40/50 UpM eingestellt.

Nach 75 Minuten war die Viskosität der Masse derart angestiegen, dass sie sich um die Rührwellen wickelte. Nach 85 Minuten begann die Polymermasse zu granulieren und war nach 95 Minuten als ganzes in ein rieselfähiges Granulat umgewandelt. Die Knetenergie wurde in dieser Umwandlungsphase mit 0,15 MJ/kg gemessen. Das Granulat wurde nach 100 Minuten ausgetragen und zeigte folgende Eigenschaften:
Monomerumsatz von ungefähr 90% (limitiert durch Glaseffekt)
Molekularmasse 315'000 g/mol (Mw)
Polydispersitätsindex von 2,25.

Die Produkttemperatur wurde mittels der Verdampfungskühlung im Bereich von 45 bis 56°C kontrolliert (Druck ca. 300 mbar abs.). Der Verlauf der Kondensatmenge und der Produkttemperatur als Funktion der Zeit lassen auf einen starken Trommsdorff-Effekt schliessen.

### Scale-up Überlegungen:

Während dem Scale-up wird das Verhältnis von Kühlfläche zu Knetreaktorvolumen kleiner (AN). Dies bedeutet, dass die nicht umgesetzten Monomermengen (z. B. 10% während den Pilotversuchen) in einem Produktionsknetreaktor kleiner werden oder vollständig verdampft sind, da zur Kühlung infolge der kleineren Verhältnisse von Kühlfläche zu Volumen mehr Monomer verdampft werden muss. Das Resultat ist eine wirtschaftliche Fahrweise, bei der die Reaktionswärme und die eingetragene Knetenergie zur thermischen Trennung von Restmonomer und Polymer sinnvoll eingesetzt werden kann.

## Patentansprüche

1. Verfahren zur Durchführung einer Massepolymerisation von Monomeren und/oder Prepolymeren, welche in ihren Polymer wenigstens teilweise löslich sind, insbesondere von Methylmethacrylat (MMA), wobei in einen Knetreaktor zumindest ein Monomer oder Prepolymer zudosiert wird,
**dadurch gekennzeichnet,**
**dass** die Massepolymerisation ohne Lösungsmittel bei amorphen Polymeren unterhalb der Glasübergangstempemtur bzw. bei kristallinen Polymeren unterhalb des Schmelzpunktes durchgeführt wird.

2. Verfahren nach Anspruch 1, **dadurch gekennzeichnet, dass** in den Knetreaktor zu dem Monomer oder Prepolymer ein Initiator/Katalysator vorgemischt oder einzeln zudosiert wird.

3. Verfahren nach Anspruch 1 oder 2, **dadurch gekennzeichnet, dass** die Polymerisationswärme durch Verdampfung von Monomer abgeführt wird.

4. Verfahren nach einem der Ansprüche 1 bis 3, **dadurch gekennzeichnet, dass** die Polymerisation direkt bis zum Granulatzustand erfolgt.

5. Verfahren nach einem der Ansprüche 1 bis 4, **dadurch gekennzeichnet, dass** die Masse in dem Knetreaktor bewegt wird.

6. Verfahren nach Anspruch 5, **dadurch gekennzeichnet, dass** bei der Bewegung der Masse in dem Knetreaktor Kompressionszonen vermieden oder klein gehalten werden.

7. Verfahren nach wenigstens einem der Ansprüche 1 bis 6, **dadurch gekennzeichnet, dass** die Polymerisation kontinuierlich durchgeführt wird.

8. Verfahren nach wenigstens einem der Ansprüche 1 bis 7, **dadurch gekennzeichnet, dass** die Masse im Knetreaktor granuliert wird.

9. Verfahren nach wenigstens einem der Ansprüche 1 bis 8, **dadurch gekennzeichnet, dass** die Polymerisation in einem ein- oder zweiwelligen Knetreaktor erfolgt.

10. Verfahren nach wenigstens einem der Ansprüche 1 bis 9, **dadurch gekennzeichnet, dass** vor der Polymerisation in einem Reaktor (Knetreaktor) eine Prepolymerisation insbesondere in einem Kessel erfolgt.

## Claims

1. A method of carrying out a bulk polymerisation of monomers and/or prepolymers which are at least partially soluble in their polymer, in particular of methyl methacrylate (MMA), with at least one monomer or prepolymer being metered into a kneader reactor,
**characterised in that**
the bulk polymerisation is carried out without solvent in the case of amorphous polymers beneath the glass transition temperature or in the case of crystalline polymers beneath the melting point.

2. A method according to Claim 1, **characterised in that** an initiator/catalyst is metered as a premix or individually into the monomer or prepolymer in the kneader reactor.

3. A method according to Claim 1 or 2, **characterised in that** the heat of polymerisation is dissipated by evaporation of monomer.

4. A method according to one of Claims I to 3, **characterised in that** the polymerisation is effected directly up to the granular state.

5. A method according to one of Claims 1 to 4, **characterised in that** the material is moved in the kneader reactor.

6. A method according to Claim 5, **characterised in that** compression zones are avoided or kept small upon the movement of the material in the kneader reactor.

7. A method according to at least one of Claims 1 to 6, **characterised in that** the polymerisation is carried out continuously.

8. A method according to at least one of Claims 1 to 7, **characterised in that** the material is granulated in the kneader reactor.

9. A method according to at least one of Claims 1 to 8, **characterised in that** the polymerisation takes place in a single-screw or dual-screw kneader reactor

10. A method according to at least one of Claims 1 to 9, **characterised in that** a prepolymerisation in particular in a vessel takes place before the polymerisation in a reactor (kneader reactor).

## Revendications

1. Procédé pour effectuer une polymérisation en masse de monomères et/ou de prépolymères qui sont au moins partiellement solubles quant en leur polymère, en particulier de méthylméthacrylate (MMA), au moins un monomère ou prépolymère étant ajouté de manière dosée dans un réacteur de pétrissage,
**caractérisé par le fait que**
la polymérisation en masse s'effectue sans solvant pour des polymères amorphes au-dessous de la température de transition du verre ou pour des polymères cristallins au-dessous du point de fusion.

2. Procédé selon la revendication 1, **caractérisé par le fait que** dans le réacteur de pétrissage est ajouté par dosage au monomère ou prépolymère, prémélangé ou individuellement, un initiateur/catalyseur.

3. Procédé selon la revendication 1 ou 2, **caractérisé par le fait que** la chaleur de polymérisation est évacuée par évaporation de monomère.

4. Procédé selon l'une des revendications 1 à 3, **caractérisé par le fait que** la polymérisation a lieu directement jusqu'à l'état de granulé.

5. Procédé selon l'une des revendications 1 à 4, **caractérisé par le fait que** la masse est mise en mouvement dans le réacteur de pétrissage.

6. Procédé selon la revendication 5, **caractérisé par le fait que**, lors du mouvement de la masse dans le réacteur de pétrissage, les zones de compression sont évitées ou maintenues réduites.

7. Procédé selon au moins l'une des revendications 1 à 6, **caractérisé par le fait que** la polymérisation est réalisée en continu.

8. Procédé selon au moins l'une des revendications 1 à 7, **caractérisé par le fait que** la masse est granulée dans le réacteur de pétrissage.

9. Procédé selon au moins l'une des revendications 1 à 8, **caractérisé par le fait que** la polymérisation s'effectue dans un réacteur de pétrissage à un ou deux arbres.

10. Procédé selon au moins l'une des revendications 1 à 9, **caractérisé par le fait qu'**avant la polymérisation dans un réacteur (réacteur de pétrissage) a lieu une prépolymérisation en particulier dans une cuve.
